Europäisches Patentamt

European Patent Office

Office européen des brevets

(11) Numéro de publication: **0 420 728 A2**

# (12) DEMANDE DE BREVET EUROPEEN

(21) Numéro de dépôt: 90402601.0

(51) Int. Cl.⁵: **A23L 1/236, A23L 1/308**

(22) Date de dépôt: **20.09.90**

(30) Priorité: **20.09.89 FR 8912332**

(43) Date de publication de la demande:
**03.04.91 Bulletin 91/14**

(84) Etats contractants désignés:
**BE CH DE DK GB IT LI NL SE**

(71) Demandeur: **SOFALIA**
**Immeuble Bellini, 1, Place Bellini**
**F-92800 Puteaux(FR)**

(72) Inventeur: **Marie, Gérard**
**62, Avenue du Général Leclerc**
**F-95390 Saint Prix(FR)**
Inventeur: **Motte, Emanuelle**
**6, rue des Carrières Saint Julien**
**F-14000 Caen(FR)**

(74) Mandataire: **Fritel, Hubert et al**
**111, route de Noisy B.P. no 9**
**F-93230 Romainville(FR)**

(54) Association comprenant un édulcorant thermolabile et un produit végétal riche en fibres alimentaires, son procédé de préparation et son utilisation en formulations alimentaires.

(57) Procédé de stabilisation de certains édulcorants intenses caractérisé en ce que l'on mélange un édulcorant thermolabile à un matériau végétal ayant une teneur en fibres alimentaires d'au moins 50 % en poids et une taille de particules comprise de préférence entre 40 et 315 microns.

EP 0 420 728 A2

Xerox Copy Centre

# ASSOCIATION COMPRENANT UN ÉDULCORANT THERMOLABILE ET UN PRODUIT VÉGÉTAL RICHE EN FIBRES ALIMENTAIRES, SON PROCÉDÉ DE PRÉPARATION ET SON UTILISATION EN FORMULATIONS ALIMENTAIRES.

L'invention concerne une association comprenant un édulcorant thermolabile et un produit végétal riche en fibres alimentaires, son procédé de préparation et son utilisation en formulations alimentaires.

L'évolution des modes de vie du monde occidental dans les dernières décennies a contribué à modifier en profondeur la demande alimentaire. L'ensemble des pays industrialisés est passé globalement d'une demande d'aliments énergétiques permettant de mener une vie où la dépense physique était importante, à une demande d'aliments auxquels il est demandé d'abord d'être équilibrés du point de vue nutritionnel, l'apport énergétique devenant moins important.

Pour répondre à cette demande en produits allégés, ont été développés et mis sur le marché des produits alimentaires à valeur calorique réduite.

Dans un premier temps, cette réduction a été obtenue par abaissement de la teneur en matière grasse, sans que la structure générale du produit soit par trop modifiée. Avec la mise au point des édulcorants intenses, il a ensuite été possible de s'attaquer à la réalisation de produits allégés par réduction de leur teneur en sucre (saccharose).

Deux problèmes majeurs existent pour cette réalisation :
- d'une part l'impossibilité de remplacer le sucre dans son rôle structurel au sein des produits dans la formule, tout en maintenant la réduction calorique,
- d'autre part, la thermolabilité, plus ou moins importante des édulcorants intenses actuellement existants, tel que l'Aspartame ou l'Acésulfame-K.

Pour ces raisons les édulcorants intenses, tel que l'Aspartame, sont actuellement quasi exclusivement utilisés dans des composés liquides ou très fortement humides, dans lesquels le sucre ne joue pas un rôle structurel majeur et qui n'on pas à être traités par la chaleur.

L'invention concernée par la présente demande réside dans la mise en oeuvre de techniques de mélange qui permettent l'obtention d'édulcorants intenses stabilisés vis à vis de la chaleur par association avec des produits végétaux riches en fibres alimentaires.

L'expression "fibre alimentaire" employée pour la première fois par Trowell en 1972 (Trowell, H.C. Ischemic heart disease and dietary fiber Am. J. Clin Nutr. 1972 25 : 926) pour décrire les constituants de la paroi cellulaire des végétaux résistant aux sécrétions enzymatiques du tube digestif de l'homme, recouvrait essentiellement les constituants polysaccharidiques de la paroi (cellulose, hémicellulose et pectines). En 1974, cette définition a été étendue aux composants non polysaccharidiques de la paroi : lignine, protéines de structure, minéraux ainsi qu'aux constituants de certains tissus spécialisés (Trowell H.C. Definitions of fiber Lancet 1974 1 503).

Un aspect de l'invention concerne un procédé de stabilisation de certains édulcorants intenses, caractérisé en ce que l'on mélange un édulcorant thermolabile à un matériau végétal ayant une teneur en fibres alimentaires d'au moins 50 % en poids et une taille de particules comprise de préférence entre 40 et 315 microns.

L'édulcorant thermolabile utilisé comme produit de départ dans le procédé de l'invention est un édulcorant intense doué d'un pouvoir sucrant au moins égal à 30 fois, de préférence 100 fois, celui du sucre et dépourvu de role structurel dans les formulations alimentaires à valeur calorique réduite par réduction de la teneur en sucre dont la préparation nécessite un stade de cuisson à température élevée, tel qu'un édulcorant artificiel, par exemple le cyclamate, la saccharine, l'Acésulfame-K ou un édulcorant dipeptidique, par exemple l'Aspartame.

Le matériau végétal utilisé comme produit de départ dans le procédé de l'invention est un matériel végétal brut tel que par exemple des fibres de pois, de tomates, de pommes, d'agrumes, de betteraves, de cacao ou de céréales ayant subi un traitement préliminaire qui le rend compatible avec un usage alimentaire, l'enrichit en fibres alimentaires et lui donne un aspect physique convenable en ce qui concerne la granulométrie. D'une façon générale, le matériau renferme une teneur en fibres alimentaires d'au moins 50 % en poids, de préférence comprise entre 65 et 85 % et déterminée selon la méthode d'analyse de fibres alimentaires dite "AOAC" décrite par Prosky et al. J. Ass. Off. Chem. 68(4) 677-679 (1985).

La taille des particules obtenue d'une façon générale par différents moyens de broyage connus tel que le broyeur à marteau ou à cylindre entre quelques microns et quelques mm est comprise de préférence entre 40 et 315 microns. Selon l'origine du matériel végétal, 35 à 65 % des particules ont une taille comprise entre 40 et 100 microns. Ces matériaux peuvent être utilisés tels quels ou après avoir été éventuellement dilacérés. Par éventuellement dilacéré, on entend que le matériau végétal de départ a subi préalablement un traitement de dilacération qui consiste à le soumettre à un traitement physique capable d'effectuer des cisaillements de la structure cristalline originelle des fibres, sans modifier sensiblement la taille des particules, ni la teneur en fibres mais ayant pour résultat d'augmenter la viscosité. La dilacération peut être effectuée à l'aide d'un homogénéisateur ou d'un broyeur colloïdal. Un tel matériau de départ est décrit dans la demande de brevet français n° 89 12331 et un exemple de préparation est donnée plus loin dans la partie expérimentale. L'invention concerne notamment un procédé caractérisé en ce que le mélange des constituants est effectué :
- soit en milieu sec par simple mélange
- soit en milieu aqueux par simple mélange ou pendant un stade de dilacération des fibres.

Le mélange en milieu sec par simple mélange consiste à incorporer une quantité d'édulcorant dans une quantité de matériau végétal de départ, éventuellement dilacéré puis séché, par brassage à l'aide d'un appareil fonctionnant en continu ou discontinu, de préférence en discontinu par exemple du type Nauta, Gondar, Lodige ou Paterson.

Le mélange en milieu aqueux par simple mélange consiste :
- soit à disperser une quantité de matériau végétal de départ, éventuellement dilacéré puis séché, dans de l'eau, éventuellement déminéralisée, contenant une quantité d'édulcorant en solution,
- soit à dissoudre une quantité d'édulcorant dans une dispersion d'une quantité de matériau végétal de départ, éventuellement dilacéré, réalisée dans de l'eau, éventuellement déminéralisée.

Le mélange en milieu aqueux pendant un stade de dilacération consiste à soumettre une suspension aqueuse, dans de l'eau éventuellement déminéralisée, de matériau végétal de départ contenant l'édulcorant, réalisée soit par dispersion d'une quantité de matériau végétal dans l'eau contenant une quantité d'édulcorant en solution soit par dissolution d'une quantité d'édulcorant dans de l'eau contenant une dispersion d'une quantité de matériau végétal, à un traitement de dilacération tel que défini ci-dessus.

Il est entendu que les quantités d'édulcorant et de matériau végétal respectivement mises en oeuvre, dépendent notamment de l'intensité du pouvoir sucrant de l'édulcorant de départ.

L'invention concerne particulièrement un procédé caractérisé en ce que l'édulcorant thermolabile est de l'Aspartame ou de l'Acésulfame de potassium, et plus particulièrement un procédé caractérisé en ce que le mélange de l'édulcorant avec le matériel végétal est réalisé en milieu aqueux à une concentration de matériau végétal comprise entre 1 et 30 %, de préférence entre 3 et 15 % et à une température comprise entre 20 et 100° C, de préférence entre 40° et 60° C. Le mélange aqueux est réalisé dans de l'eau, éventuellement déminéralisée. La concentration en matériau végétal peut varier de 1 à 30 % selon le matériau de départ et l'appareillage utilisé. De préférence la concentration est comprise entre 3 et 15 %. Le mélange édulcoré obtenu selon le procédé de l'invention est ensuite deshydraté selon une méthode connue telle que par spray dans une tour de séchage équipée d'une turbine ou de buses, dans le cas où l'on désire un produit sous forme de poudre, ou sur tambour, en présence d'adjuvants de séchage, dans le cas où l'on désire un produit sous forme de paillettes.

L'invention concerne tout particulièrement un procédé caractérisé en ce que le mélange est réalisé pendant un stade de dilacération des fibres alimentaires :
- soit par homogénéisation sous pression d'au moins 50 Kg/cm², de préférence 150 à 450 Kg/cm²
- soit à l'aide d'un broyeur colloïdal à serrage négatif, selon un cycle que l'on peut répéter plusieurs fois et en ce que la concentration en édulcorant par rapport au matériau végétal est comprise entre 0,5 et 15 %.

Dans le cas où la dilacération est effectuée par homogénéisation, celle-ci est réalisée à l'aide d'un appareil comprenant une pompe fonctionnant sous pression élevée, tel qu'un homogénéisateur Manton Gaulin et dont la pression peut varier notamment selon le matériel de départ. La pression est de préférence comprise entre 150 et 450 Kg/cm². Dans le cas ou la dilacération est effectuée à l'aide du broyeur colloïdal, l'appareil est utilisé dans des conditions connues avec un serrage négatif, par exemple comme dans la fabrication des caséinates.

Le nombre de cycles auquel on soumet la suspension peut varier de 1 à 10, de préférence de 2 à 4, selon le matériau de départ et selon le moyen de dilacération utilisé. Il varie notamment selon le niveau de dilacération souhaité auquel correspond une viscosité de la suspension que l'on peut mesurer après chaque cycle avec un appareil Rhéomat 108 et exprimer en centipoise, noté cp. D'une manière générale, selon la concentration en matériau végétal et le moyen de dilacération, on opère de façon à obtenir une viscosité d'au moins 600 cp, de préférence comprise entre 600 et 5000 cp.

Dans les cas où les fibres sont préalablement dilacérées, on utilise le même procédé que décrit ci-dessus.

La concentration en édulcorant par rapport aux fibres varie entre 0,5 et 15 %, de préférence entre 5 et 10 %, notamment selon le taux de sucre que l'on désire remplacer dans la formulation alimentaire.

Le mélange édulcoré et visqueux obtenu selon le procédé de l'invention est ensuite déshydraté selon une méthode connue telle que par procédé spray dans une tour de séchage équipée d'une turbine ou de buses, dans le cas où l'on désire un produit sous forme de poudre, ou sur un tambour, en présence d'un agent de séchage, dans le cas où l'on désire un produit sous forme de paillettes.

Un autre aspect de l'invention concerne une association stabilisée à pouvoir édulcorant, caractérisée en ce qu'elle comprend un édulcorant thermolabile et un matériau végétal ayant une teneur en fibres alimentaires d'au moins 50 % en poids et une taille de particules comprise de préférence entre 40 et 315 microns. Le matériau végétal de l'association peut être éventuellement dilacéré. Dans les conditions préférées de l'invention, l'édulcorant est de l'Aspartame ou l'Acésulfame-K, le matériau végétal a une teneur en fibres alimentaires comprise entre 65 et 85 % en poids, 35 à 65 % des particules ayant une taille comprise entre 40 et 100 microns et a été dilacéré en présence de l'édulcorant.

La stabilisation de l'édulcorant dans l'association concernée par l'invention est montrée après le stade de séchage, qui d'une façon générale fait intervenir des températures relativement élévées telle qu'au moins 150°C au début du procédé et 30 à 60°C à la fin du procédé, par la conservation du pouvoir sucrant apporté par l'édulcorant et l'absence de dégradation mise en évidence par des techniques d'analyse connues. Ainsi la teneur en Aspartame et son absence de dégradation en dicétopipérazine peut être déterminée par chromatographie sous haute pression en phase inversée, par exemple à 22°C sur une colonne de 50 mm de longueur et de 4 mm de diamètre garnie de Nucléosil C 18 (5 microns) à un débit de 2 ml/mn d'éluant 0,01 M en hexanesulfonate de sodium, 0,0025 M en phosphate de potasssium dipotassique ajusté à pH 3,0 et contenant 25 % d'acétonitrile avec une détection spectrophotométrique à 210 nm. La teneur en Acésulfame-K peut être déterminée sur une colonne de 250 mm de longueur et 4,6 mm de diamètre garnie de Lichrosorb RP18 (5 microns), un éluant à 35 de méthanol dans l'eau et 0,01 M en hydrogénosulfate de tétrabutylammonium, avec une détection à 227 nm.

L'invention a également pour objet l'utilisation de l'association décrite ci-dessus pour la préparation de formulations alimentaires édulcorées nécessitant un stade de cuisson à température élevée telles que les produits de farine ou un stade de stérilisation en milieu liquide.

L'utilisation de l'association consiste à l'incorporer dans une préparation alimentaire humide par agitation vive pendant quelques minutes par un moyen mécanique, par exemple à l'aide d'une turbine, de façon à édulcorer convenablement et éventuellement donner une texture épaisse et onctueuse sans ajout d'agent de texture habituellement nécessaire à des formulations alimentaires à goût sucré qui doivent ensuite subir un stade de cuisson au four à l'état sec ou faiblement humide tel que les produits contenant de la farine ou un stade de stérilisation en milieu liquide.

L'invention concerne également les formulations alimentaires édulcorées contenant une association décrite ci-dessus.

Dans les formulations alimentaires, l'association remplace le sucre en partie, par exemple 20 à 75 %, de préférence 25 à 35 % de celui-ci ou en totalité par exemple dans les préparations telles que des gâteaux, des biscuits ou des crèmes-dessert et remplace éventuellement simultanément un agent de masse, par exemple dans les produits contenant de la farine.

Dans les formulations préférées, l'association remplace simultanément la totalité du sucre et les agents de texture habituellement utilisés tel que l'amidon modifié, le carrhagénate ou un mélange des deux, par exemple dans les crèmes-dessert qui ont une intensité du goût sucré et une viscosité comparable aux formulations correspondantes renfermant du sucre et un agent de texture.

Les exemples suivants illustrent l'invention sans la limiter.

Préparation 1 : fibres de pois dilacérées par homogénéisation.

On traite 1000 g de fibres de pois contenant 80 % de fibres alimentaires et ayant une taille de particules comprise entre 40 et 200 microns (environ 50 % des particules compris entre 50 et 100 microns) que l'on disperse dans de l'eau à la concentration de 10 % en poids et à une température de 40°C. Le mélange est homogénéisé par passage dans un homogénéisateur Manton Gaulin sous une pression de 230 kg/cm² en effectuant le cycle 4 fois. La mesure de la viscosité de la suspension après chaque cycle donne les résultats suivants :
viscosité initiale : 50 cp
viscosité après le 1er cycle : 1100 cp
viscosité après le 2ème cycle : 1500 cp
viscosité après le 3ème cycle : 2200 cp
viscosité après le 4ème cycle : 3200 cp
(mesure avec Rhéomat 108 pour une vitesse de cisaillement de 50 tours/mn avec le cylindre n° 1).

4

La suspension obtenue est ensuite utilisée directement comme matériau végétal de départ dilacéré pour réaliser un mélange en milieu aqueux par simple mélange avec un édulcorant. Elle peut être éventuellement séchée par deshydratation dans une tour de séchage équipée d'une turbine avec un procédé spray et une température d'entrée comprise entre 230 et 270° C. On récupère le produit à une température finale inférieure à 40° C et une teneur en eau inférieure à 4 %. Le produit séché obtenu est ensuite utilisé comme matériau végétal dilacéré pour réaliser un mélange en milieu sec par simple mélange avec un édulcorant.

Préparation 2 : fibres de cacao dilacérées par homogénéisation.

On traite 1000 g de fibres de cacao contenant 70 % de fibres alimentaires et ayant une taille de particules comprise entre 40 et 200 microns (environ 50 % des particules compris entre 40 et 80 microns) que l'on disperse puis homogénéise comme dans la préparation 1 à la concentration de 7 % en poids et sous une pression de 200 kg/cm$^2$ en effectuant 2 cycles. On obtient les résultats suivants :
viscosité initiale : 30 cp
viscosité après le 1er cycle : 350 cp
viscosité après le 2ème cycle : 600 cp
(Rhéomat 108 à 50 tours/mn et cylindre n° 1).
On utilise la suspension obtenue comme décrit dans la préparation 1.

Préparation 3 : fibres de betteraves dilacérées par homogénéisation.

On traite 1000 g de fibres de betteraves contenant 80 % de fibres alimentaires et ayant une taille de particules comprise entre 40 et 200 microns (environ 50 % des particules compris entre 50 et 100 microns) que l'on disperse puis homogénéise comme dans la préparation 2. On obtient les résultats suivants :
viscosité initiale : 30 cp
viscosité après le 1er cycle : 2900 cp
viscosité après le 2ème cycle : 3400 cp
(Rhéomat 108 à 50 tours/mn et cylindre n° 2).
On utilise la suspension obtenue comme décrit dans la préparation 1.

Préparation 4 : fibres de cacao dilacérées par broyeur colloïdal.

On traite 1000 g de cacao contenant 70 % de fibres alimentaires et ayant une taille de particules comprise entre 40 et 200 microns (environ 50 des particules compris entre 40 et 80 microns) que l'on disperse dans de l'eau à la concentration de 3 % en poids et à une température de 40° C puis soumet à un cycle de broyage dans un broyeur MK 95 de FRYMA sous un serrage négatif de 3,50. On obtient les résultats suivants :
viscosité initiale : 30 cp
viscosité après traitement : 600 cp
On utilise la suspension obtenue comme décrit dans la préparation 1.

**EXEMPLE 1** : mélange à sec de fibres de betteraves dilacérées et d'Aspartame.

Dans un mélangeur Paterson on introduit 1000 g de fibres de betteraves obtenues à la préparation 3 (contenant environ 80 % de fibres alimentaires et environ 50 % des particules ayant une taille comprise entre 50 et 100 microns). On introduit 100 g d'Aspartame et brasse pendant 30 mn. Le produit obtenu a une teneur en Aspartame de 10 % dosée par HPLC (écart inférieur à 0,5 % selon les échantillons).

**EXEMPLE 2** : mélange humide de fibres de pois et d'Aspartame par homogénéisation.

On traite 1000 g de fibres de pois contenant 80 % de fibres alimentaires et ayant une taille de particules comprise entre 40 et 200 microns (environ 50 % des particules compris entre 50 et 100 microns) que l'on disperse dans de l'eau a la concentration de 10 % en poids et à une température de 40°C. On ajoute 100 g d'Aspartame. Le mélange est homogénéisé par passage dans un homogénéisateur Manton Gaulin sous une pression de 230 Kg/cm$^2$ en effectuant le cycle 4 fois. La viscosité de la suspension obtenue est de 3200 cp. On sèche la suspension par deshydratation sur un tour Niro à turbine à la vitesse de 23000 tours/mn, avec une température de l'air de 200°C à l'entrée et 110°C à la sortie et une température du produit à 40°C. Le produit obtenu a une teneur en Aspartame de 10 % et une absence de produit de dégradation en HPLC.

**EXEMPLE 3** : mélange humide de fibres de cacao et d'Aspartame par homogénéisation.

On traite 1000 g de fibres de cacao contenant 70 % de fibres alimentaires et ayant une taille de particules comprise entre 40 et 200 microns (environ 50 des particules compris entre 40 et 80 microns) que l'on disperse dans de l'eau à la concentration de 7 % en poids et à une température de 40°C. On ajoute 100 g d'Aspartame. Le mélange est homogénéisé par passage dans un homogénéisateur Manton Gaulin sous une pression de 200 kg/cm$^2$ en effectuant le cycle 2 fois. La viscosité de la suspension obtenue est de 600 cp. On sèche la suspension comme décrit dans l'exemple 2. Le produit obtenu a une teneur en Aspartame de 10 % et une absence de produit de dégradation en HPLC.

**EXAMPLE 4** : formulations alimentaires.

| Crème dessert à la vanille : | | |
|---|---|---|
| **INGREDIENTS** | **TEMOIN %** | **ESSAI %** |
| Lait écrémé | 84,89 | 92,99 |
| Sucre cristallisé | 10,00 | - |
| Amidon modifié | 3,50 | - |
| Carraghenates | 0,10 | - |
| Fibres de betteraves à 1 % d'Aspartame préparées selon le procédé de l'exemple 1 | - | 5,50 |
| Arome vanille | 1,50 | 1,50 |
| Colorant jaune | 0,01 | 0,01 |
| | $\overline{100}$ | $\overline{100}$ |
| Viscosité du produit final | 350 cp | 360 cp |
| Produits de dégradation (en % de l'aspartame incorporé après stérilisation) | - | 2 % |
| Intensité du goût sucré (panel test) | | identique au témoin |

6

Galette bretonne :

| INGREDIENTS | TEMOIN % | ESSAI % |
|---|---|---|
| Beurre | 18,00 | 17,80 |
| Farine | 54,00 | 53,20 |
| Oeufs | 1,80 | 1,77 |
| Sucre semoule | 21,00 | 15,53 |
| Sel | 0,80 | 0,78 |
| Diamalt | 0,90 | 0,89 |
| Mélange de fibres de pois et d'acésulfame de potassium préparées suivant le procédé de l'exemple 1 | - | 5,17 |
| Eau | 3,40 | 4,76 |
| Levure | 4 g/kg de pâte | 4 g/kg de pâte |
| Pyrophosphate | 1 g/kg de pâte | 1 g/kg de pâte |
| Soude | 4 g/kg de pâte | 4 g/kg de pâte |
| Produits de dégradation (en % de l'acésulfame incorporé après cuisson) | - | 0,5 % |
| Intensité du goût sucré (panel test) | | identique au témoin |

Génoise :

| INGREDIENTS | TEMOIN % | ESSAI % |
|---|---|---|
| Farine | 23,50 | 23,50 |
| Oeufs | 35,60 | 35,60 |
| Sucre semoule | 31,40 | 21,90 |
| Sorbitol | 2,10 | 2,10 |
| Dimodan 10 % | 1,50 | 1,50 |
| Fibres de pois à 10 % d'aspartame préparées selon l'exemple 2 | - | 2,30 |
| Eau | - | 7,20 |
| Westine | 5,90 | 5,90 |
| | 100,00 | 100,00 |
| Pourcentage de produits de dégradation après après cuisson (en % de l'aspartame incorporé) | - | 1,00 % |
| Intensité du goût sucré (panel test) | | identique au témoin |

| Gâteau type quatre quarts : | | |
|---|---|---|
| **INGREDIENTS** | **TEMOIN %** | **ESSAI %** |
| Beurre | 22,00 | 22,00 |
| Farine | 25,10 | 25,00 |
| Oeufs | 23,00 | 23,00 |
| Sucre semoule | 26,50 | 18,55 |
| Sorbitol | 2,00 | 2,00 |
| Sel | 1,00 | 1,00 |
| Poudre à lever | 0,40 | 0,50 |
| Fibres de cacao à 10 % d'aspartame préparées selon l'exemple 3 | - | 2,65 |
| Eau | - | 4,64 |
| Agent de masse | - | 0,66 |
| | 100,00 | 100,00 |
| Pourcentage de produits de dégradation après après cuisson (en % de l'aspartame incorporé) | - | 1,00 % |
| Intensité du goût sucré (panel test) | | identique au témoin |

Dans les formules alimentaires données ci-dessus, la cuisson au four comprend une température de four de 210°C et une température à coeur du produit de 90°C et la stérilisation comprend une température de 134°C pendant 40 secondes. Dans ces conditions, des essais témoins de dégradation de l'Aspartame donnent des taux de dégradation respectivement de 30 % et 40 % pour la cuisson au four dans un produit de farine et pour la stérilisation dans de l'eau.

**Revendications**

1) Procédé de stabilisation de certains édulcorants intenses caractérisé en ce que l'on mélange un édulcorant thermolabile à un matériau végétal ayant une teneur en fibres alimentaires d'au moins 50 % en poids et une taille de particules comprise de préférence entre 40 et 315 microns.

2) Procédé selon la revendication 1 caractérisé en ce que le mélange des constituants est effectué
- soit en milieu sec par simple mélange
- soit en milieu aqueux par simple mélange ou pendant un stade de dilacération des fibres.

3) Procédé selon la revendication 1, caractérisé en ce que l'édulcorant thermolabile est de l'Aspartame ou de l'Acésulfame de potassium.

4) Procédé selon les revendications 2 et 3, caractérisé en ce que le mélange de l'édulcorant avec le matériel végétal est réalisé en milieu aqueux à une concentration de matériau végétal comprise entre 1 et 30 %, de préférence entre 3 et 15 % et à une température comprise entre 20 et 100°C, de préférence entre 40° et 60°C.

5) Procédé selon la revendication 4, caractérisé en ce que le mélange est réalisé pendant un stade de dilacération des fibres alimentaires,
- soit par homogénéisation sous pression d'au moins 50 Kg/cm², de préférence 150 à 450 Kg/cm²,
- soit à l'aide d'un broyeur colloïdal à serrage négatif, selon un cycle que l'on peut répéter plusieurs fois et en ce que la concentration en édulcorant par rapport au matériau végétal est comprise entre 0,5 et 15 %.

6) Association stabilisée a pouvoir édulcorant, caractérisée en ce qu'elle comprend un édulcorant thermolabile et un matériau végétal ayant une teneur en fibres alimentaires d'au moins 50 % en poids et une taille de particules comprise de préférence entre 40 et 315 microns.

7) Utilisation de l'association selon la revendication 6 pour la préparation de formulations alimentaires édulcorées nécessitant un stade de cuisson a température élevée telles que les produits de farine ou un stade de stérilisation en milieu liquide.

8) Formulations alimentaires édulcorées contenant une association selon la revendication 6.